# DEMANDE DE BREVET EUROPEEN

(11) **EP 2 990 350 A1**
(43) Date de publication de la demande: **02.03.2016**
(21) Numéro de dépôt: 15182226.9
(22) Date de dépôt: 24.08.2015
(51) Int. Cl.: B65D 51/28, B65D 47/42

(54) **DISPOSITIF DISTRIBUTEUR**

(30) Priorité: 22.08.2014 US 201414466476
(71) Demandeur: Moreau, Françoise, 33470 Gujan-Mestras (FR)
(72) Inventeur: Moreau, Françoise, 33470 Gujan-Mestras (FR)
(74) Mandataire: Le Forestier, Eric

(57) **Abrégé**

L'invention concerne un élément d'assemblage, du type comprenant un filetage (14a) pour la réception d'un récipient autonome (50) doté d'un film de fermeture, soit directement, soit par l'intermédiaire d'un élément d'accueil (20) pour un tel récipient autonome, ainsi qu'une partie de passage (40) généralement cylindrique, lisse et dégagée et intégrant un organe (42) d'ouverture du film de fermeture du récipient autonome par déchirement périphérique.

Cet élément est remarquable en ce qu'il comprend en outre un évasement (110) dans lequel débouche directement la partie de passage et doté de moyens pour la fixation non vissée d'un élément plus large apte à recevoir la dose de produit contenue dans le récipient autonome après ouverture du film de fermeture.

On propose également une combinaison d'un tel élément et d'un récipient autonome, et un dispositif applicateur et un shaker dotés d'un tel élément.

## Description

### Domaine de l'invention

L'invention concerne de manière générale un dispositif distributeur de doses destiné à distribuer une quantité déterminée d'un produit, typiquement un produit liquide, semi-liquide, visqueux ou en poudre.

### Arrière-plan de l'invention

On connaît déjà par le document WO 2013/124553A2 au nom du demandeur un dispositif distributeur mélangeur destiné à assurer un mélange homogène de deux produits (deux liquides ou un liquide et une poudre) contenus respectivement dans un récipient autonome (dose) et dans un récipient récepteur. Un vissage d'un élément d'accueil retenant le récipient autonome sur un élément d'assemblage fixé sur le récipient récepteur autorise l'ouverture d'un opercule du récipient autonome en dégageant latéralement cet opercule pour que l'élément d'assemblage et l'élément d'accueil joints forment un volume intérieur constituant un passage généralement étanche et généralement lisse et dégagé entre l'espace intérieur du récipient récepteur et l'espace intérieur du récipient autonome.

### Résumé de l'invention

La présente invention vise à étendre les possibilités d'utilisation d'un tel agencement.

On propose à cet effet selon un premier aspect un élément d'assemblage, du type comprenant un filetage pour la réception d'un récipient autonome doté d'un film de fermeture, soit directement, soit par l'intermédiaire d'un élément d'accueil pour un tel récipient autonome, ainsi qu'une partie de passage généralement cylindrique, lisse et dégagée et intégrant un organe d'ouverture du film de fermeture du récipient autonome par déchirement périphérique, caractérisé en ce qu'il comprend en outre un évasement dans lequel débouche directement la partie de passage et doté de moyens pour la fixation non vissée d'un élément plus large apte à recevoir la dose de produit contenue dans le récipient autonome après ouverture du film de fermeture.

Cet élément comprend de façon avantageuse mais optionnelle les caractéristiques additionnelles suivantes, prises individuellement ou en toutes combinaisons techniquement compatibles :
* l'élément d'assemblage intègre au moins deux moyens de fixation de types différents.
* les moyens de fixation sont choisis dans un groupe comprenant les filetages internes, les filetages externes, les charnières, les dispositifs d'emmanchement étanche, les dispositifs à baïonnette, les dispositifs de clippage.
* ledit évasement présente une forme généralement plane et est apte à recevoir un élément d'application de produit.
* l'élément d'application de produit est choisi dans un groupe comprenant les tissus, les mousses, les éponges, les brosses et les pinceaux.
* ledit évasement présente à sa périphérie un partie d'assemblage pour sa fixation étanche au bord d'un réceptacle de type verre ou gobelet.

On propose selon un deuxième aspect une combinaison d'un élément d'assemblage tel que défini ci-dessus et d'un récipient autonome présentant un corps creux principal et une base cylindrique possédant un filetage.

Cette combinaison comprend de façon avantageuse mais optionnelle les caractéristiques additionnelles suivantes, prises individuellement ou en toutes combinaisons techniquement compatibles :
* le filetage du récipient autonome est externe.
* lequel le filetage du récipient autonome est interne et le film de fermeture s'étend sur une collerette en renfoncement à l'intérieur du filetage interne.

On propose également une combinaison d'un élément d'assemblage tel que défini plus haut, d'un élément d'accueil intermédiaire doté d'un filetage interne pour son vissage sur l'élément d'assemblage, et d'un récipient autonome, avec des moyens de montage à baïonnette du récipient autonome sur l'élément d'accueil.

Selon un autre aspect encore, on propose une combinaison d'un élément d'assemblage tel que défini plus haut, d'un élément d'accueil intermédiaire doté d'un filetage interne pour son vissage sur l'élément d'assemblage, et d'un récipient autonome, dans lequel l'élément d'accueil intermédiaire comprend une bande de garantie détachable prolongeant le filetage interne en direction de l'élément d'assemblage et apte à sélectivement autoriser, après retrait, un vissage permettant le déchirement périphérique du film de fermeture du récipient autonome.

On propose également un dispositif applicateur d'un produit dosé, caractérisé en ce qu'il comprend un élément d'assemblage tel que défini plus haut et un élément d'application de produit fixé sur l'évasement de l'élément d'assemblage.

L'élément d'assemblage est réalisé d'un seul tenant ou par solidarisation de deux parties dont l'une porte l'évasement et l'élément d'application de produit.

Dans une forme de réalisation, l'élément d'application de produit possède une armature et est fixé par clippage de l'armature sur l'évasement.

Enfin on propose un shaker pour la préparation de boissons ou de mélanges de produits, caractérisé en ce qu'il comprend en combinaison un réceptacle de type verre ou gobelet et un élément d'assemblage à partie d'assemblage pour fixation étanche comme défini plus haut.

### Brève description des dessins

D'autres caractéristiques, buts et avantages apparaîtront mieux à la lecture de la description détaillée qui va suivre, faite en référence aux figures annexées données à titre non limitatif et sur lesquelles :
La Figure 1 est une vue en coupe axiale d'un dispositif applicateur selon l'invention,
La Figure 2 est une vue en élévation d'une autre réalisation d'un dispositif applicateur,
Les Figures 3A et 3B illustrent, respectivement en coupe axiale et en élévation, une forme particulière d'un élément d'assemblage permettant sa fixation sur des récipients différents,
Les Figures 3C et 3D illustrent une autre forme particulière d'un élément d'assemblage permettant sa fixation sur des récipients différents,
La Figure 4 illustre en coupe axiale une première forme de réalisation d'un récipient autonome fileté,
La Figure 5 illustre en coupe axiale une deuxième forme de réalisation d'un récipient autonome fileté,
La Figure 6 illustre en coupe axiale un dispositif de type shaker pourvu d'une autre forme de réalisation d'un élément d'assemblage et d'un récipient autonome fileté,
La Figure 7 illustre plus en détail, en coupe axiale, l'élément d'assemblage du dispositif de la Figure 6,
La Figure 8 illustre en coupe une variante d'un détail de l'élément de la Figure 7,
La Figure 9 illustre en coupe axiale une variante du dispositif de type shaker, avec élément d'accueil intermédiaire,
La Figure 10 illustre une combinaison particulière d'un récipient récepteur, d'un élément d'assemblage, d'un élément d'accueil et d'un récipient autonome, notamment à des fins de diagnostic,
Les Figures 11A et 11B illustrent, respectivement en coupe axiale et en élévation partiellement arrachée, un récipient autonome doté de moyens de montage à baïonnette,
Les Figures 12A et 12B illustrent, respectivement en élévation partiellement arrachée et en coupe axiale, un élément d'accueil doté de moyens de montage à baïonnette homologues, et doté également d'une bague de garantie,
La Figure 13 est une vue en coupe axiale d'un dispositif de diagnostic avec élément d'assemblage à double fonction d'ouverture,
Les Figures 14 à 16 illustrent en coupe axiale trois variantes de réalisation du dispositif de la Figure 14, et
La Figure 17 illustre en perspective une armature pour un élément formant filtre prévu dans les dispositifs des Figures 15 et 16.

### Description détaillée de formes de réalisation préférées

Tous les dispositifs que l'on va maintenant décrite reprennent le principe d'un récipient autonome, d'un élément d'assemblage à bec de découpage formant éventuellement bec verseur, et le cas échéant d'un élément d'accueil comme décrit dans le document WO 2013/124553A2, dont le contenu est à considérer comme faisant partie de la présente description.

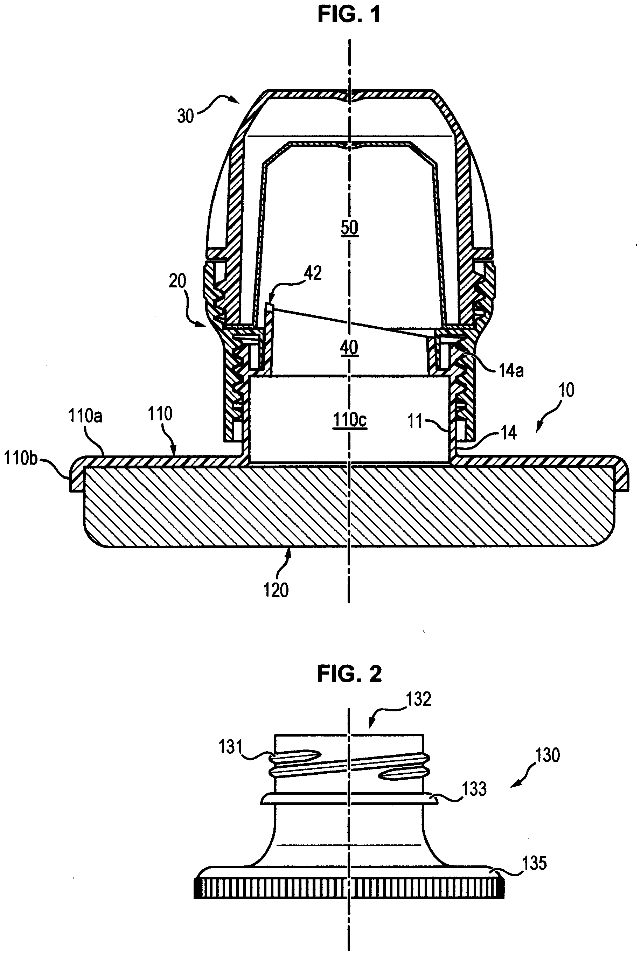

En référence tout d'abord à la Figure 1, on va décrire une forme de réalisation de l'invention où le récipient autonome est destiné à être utilisé avec un dispositif applicateur permettant d'appliquer le contenu du récipient autonome sur une surface.

A cet effet, le dispositif applicateur comprend un élément d'assemblage 10 qui comprend une partie applicatrice 110 comprenant une surface généralement plane 110a et un rebord périphérique 110b s'étendant vers le bas sur la Figure.

Un matériau d'application 120 tel qu'une mousse, un tissu, une éponge, une brosse, un pinceau ou autre, ou toute combinaison de matériaux d'application de type naturel, synthétique ou en biomatériau(x), est fixée sur la partie applicatrice 110 à l'aide d'un adhésif, ou une armature telle qu'un cadre périphérique (non illustré) pouvant être fixé sur la partie 110 par clippage, vissage, montage baïonnette, etc. Dans une forme particulière, le cadre périphérique peut être articulé sur la partie 110.

L'élément d'assemblage 10 comprend dans sa région supérieure (sur la Figure) une configuration analogue à celle décrite dans le document WO 2013/124553A2, avec essentiellement une bague 11 dont la face externe 14 est lisse en partie inférieure et filetée extérieurement (en 14a) dans sa partie supérieure.

Une partie biseautée 40 forme un passage 40 et un bec d'ouverture présentant un organe 42 de perçage, de déchirement et de dégagement d'opercule.

La partie formant passage 40 communique avec le matériau d'application 120 via une ouverture 110c prévue dans la région centrale de la partie 110, où la bague 11 est formée.

Le dispositif applicateur comprend en outre un élément d'accueil 20 et un couvercle 30 aptes à recevoir conjointement un récipient autonome jetable 50 ou capsule, pourvu d'un opercule 58, par exemple d'un des types décrits dans WO 2013/124553A2 ou dans la suite de la présente description.

Le dispositif applicateur peut être utilisé en plaçant un récipient autonome neuf en position verrouillée dans la cavité définie conjointement par les éléments 20 et 30, puis en vissant cet ensemble sur l'élément d'assemblage 10, l'opercule 58 de la capsule 50 étant alors déchiré périphériquement et effacé par la dent 42 de la partie formant passage 40, comme décrit dans WO 2013/124553A2.

Le contenu liquide de la capsule 50 peut alors circuler à travers la partie formant passage 40 vers le matériau d'application 120 qui se sature avec ce liquide.

Le dispositif peut alors être appliqué sur une surface pour appliquer à celle-ci le liquide de manière régulière à l'aide du matériau d'application. Le dispositif applicateur peut coopérer avec tout récipient autonome décrit dans WO 2013/124553A2 ou dans la suite. La partie supérieure munie du récipient autonome une fois ouvert forme en même temps un manche du dispositif applicateur, aucun manche ou poignée distinct n'étant ainsi à prévoir.

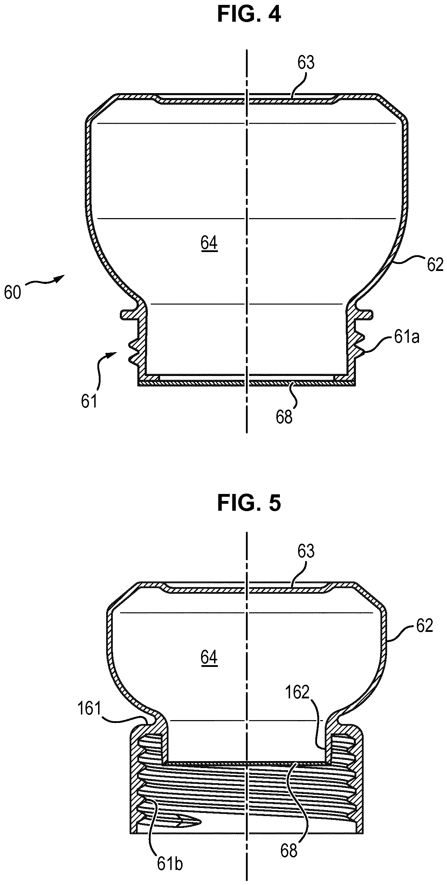

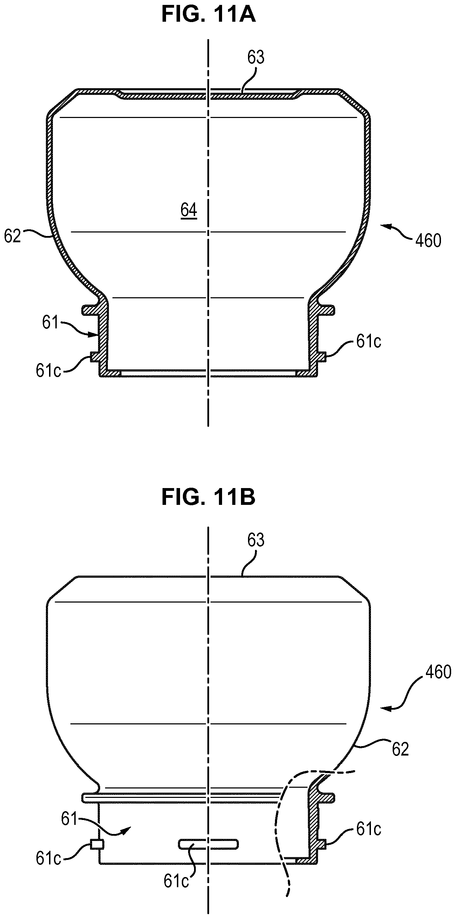

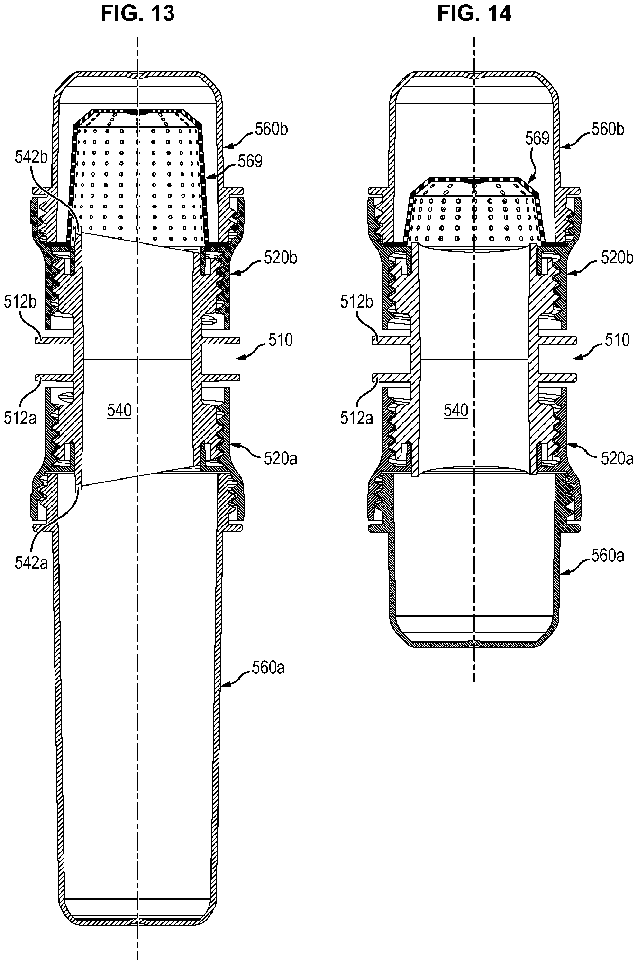

En particulier, le dispositif applicateur peut être utilisé avec un dispositif dépourvu de couvercle 30, c'est-à-dire avec un récipient autonome pourvu directement d'un filetage, comme décrit en particulier en référence aux Figures 14 à 16 du document WO 2013/124553A2 ou en référence aux Figures 4 et 5 de la présente demande, ou encore avec un récipient autonome à montage baïonnette décrit en référence aux Figures 11 a et 11 b de la présente demande.

En référence à la Figure 2, une autre forme de réalisation d'un dispositif applicateur selon l'invention comprend un élément applicateur 130 disjoint de l'élément d'assemblage, qui peut être alors par exemple du type à filetage interne décrit dans WO 2013/124553A2. L'élément applicateur 130 présente dans sa région centrale une configuration analogue à celle du goulot d'une bouteille, avec un filetage externe 131 entourant une ouverture 132 formée dans une partie plane 135 destinée à recevoir un matériau d'application et une collerette 133 formant butée de vissage.

L'élément d'assemblage est vissé sur l'élément 130 pour former ensemble (et le cas échéant avec un élément d'accueil) le dispositif applicateur.

Selon une autre forme de réalisation d'un dispositif applicateur à élément applicateur séparé, on prévoit un élément applicateur comprenant dans sa région centrale une bague dotée d'un filetage femelle, de manière à pouvoir y adapter directement le goulot extérieurement fileté d'une bouteille contenant un produit à appliquer. Ce dispositif s'utilise en le vissant simplement sur le goulot de la bouteille, avec ou sans dégagement d'un opercule.

Un dispositif applicateur tel que décrit dans ce qui précède possède une grande variété d'utilisations pour l'application de produits sur la surface d'objets, de la peau humaine ou animale, etc. tels que des produits chimiques (insecticides, fongicides ...), pharmaceutiques (médicaments, antiseptiques, ...), ou encore en cosmétique, en soins de le peau, en nettoyage de plaies, en nettoyage de diverses surfaces, en traitement de surface, en peinture ou application de vernis, etc. Il est extrêmement pratique d'application, un simple vissage d'un récipient operculé fileté, ou de l'élément d'accueil lorsqu'il est prévu, permettant de libérer de façon sûre et entière le produit à appliquer contenu dans le récipient autonome. Et en combinaison avec une bande de garantie sur élément d'accueil comme décrit dans la suite, on peut assurer à l'utilisateur que le produit contenu dans le récipient autonome et ledit élément d'accueil n'ont jamais servi.

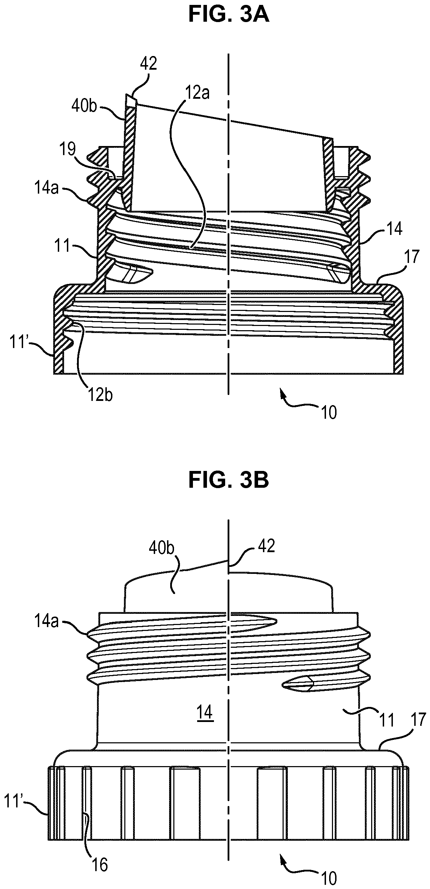

En référence maintenant aux Figures 3A et 3B, un élément d'assemblage 10 selon une variante de réalisation de l'invention est conçu pour être adapté à différents types de récipients récepteurs.

A cet effet, la bague extérieure 11 comprend un premier filetage interne 12a apte à coopérer avec un premier type de filetage de récipient récepteur, et se prolonge par une partie 11' de plus grand diamètre, située à l'opposé du filetage externe 14a en direction axiale et dans laquelle est formé un second filetage interne 12b apte à coopérer avec un deuxième type de filetage de récipient récepteur.

Pour le reste, l'élément d'assemblage présente de préférence une structure conforme aux Figures 1 à 4 du document WO 2013/124553A2.

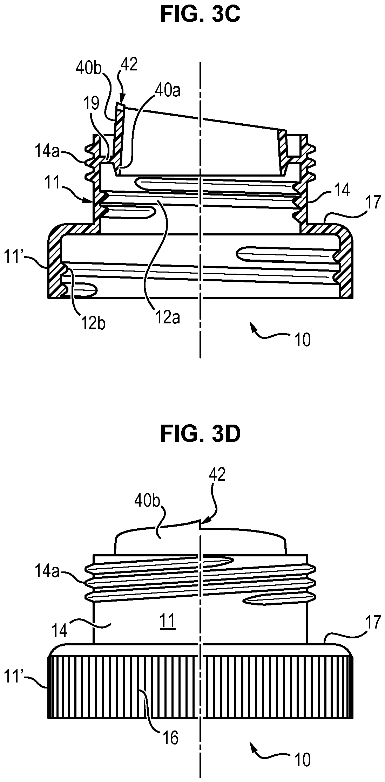

Les Figures 3C et 3D illustrent une autre forme de réalisation encore d'un élément d'assemblage 10 à deux filetages, où le filetage de plus grand diamètre 12b est adapté pour un biberon, le dispositif s'utilisant alors avec des capsules de lait maternisé.

Selon une autre variante encore, de façon non représentée, on prévoit un élément d'assemblage 10 doté d'une part d'un filetage tel que le filetage 12a, et d'autre part d'un moyen de fixation non vissée tel qu'un moyen de clippage, une charnière d'articulation sur un récipient récepteur, un montage à baïonnette, un moyen d'emmanchement à lèvre(s) d'étanchéité, l'élément 10 pouvant ainsi s'utiliser typiquement soit avec une bouteille à goulot fileté, soit avec un autre récipient sans goulot fileté et doté de moyens de fixation non vissée homologues.

De cette manière, un même type d'élément d'assemblage peut être utilisé avec différents types de récipients récepteurs, tels qu'une bouteille, une autre capsule operculée, une éprouvette, un biberon, un verre ou gobelet comme va le voir également plus loin, etc. Dans une autre variante non illustrée, on peut prévoir plus de deux filetages moyens de montage pour récipients récepteurs.

La Figure 4 illustre une variante d'un récipient autonome 60 doté sur une collerette inférieure 61 d'un filetage externe 61 a. Dans cette variante, la section transversale du récipient au niveau de sa paroi latérale 62 du récipient est sensiblement plus grande qu'au niveau de sa région filetée, ce qui permet d'augmenter sa contenance en particulier pour des applications de dosage/mélangeage de lait maternisé ou autres produits où la dose standard présente un volume significatif.

Un tel récipient autonome 60 est de préférence réalisé par injection-soufflage ou par extrusion-soufflage.

La Figure 5 illustre une autre variante d'un récipient autonome à filetage. Dans cette variante, on trouve non plus un filetage externe 61a comme dans le cas de la Figure 4 mais un filetage interne 61 b. L'opercule 68 est alors situé en renfoncement vers le haut par rapport à l'extrémité ouverte (extrémité inférieure sur la Figure 5) du récipient autonome 60./

En particulier, le récipient 60 comprend à un niveau axial intermédiaire un rebord rentrant 161 à partir du bord intérieur duquel s'étend vers le bas une jupe généralement cylindrique 162 présentant un bord libre inférieur annulaire sur lequel est fixé l'opercule 68.

Un tel récipient autonome 60 est apte à coopérer directement avec un élément d'assemblage tel que celui représenté sur les Figures 1 à 4 du document WO 2013/124553A2, ou encore sur les Figures 3A et 3B de la présente demande. Dans ce cas, l'élément d'accueil 20 est omis, et le dispositif de l'invention comprend alors seulement deux parties, à savoir l'élément d'assemblage 10 et un récipient autonome jetable 60, pour ainsi limiter le nombre de pièces et faciliter la manipulation générale du dispositif.

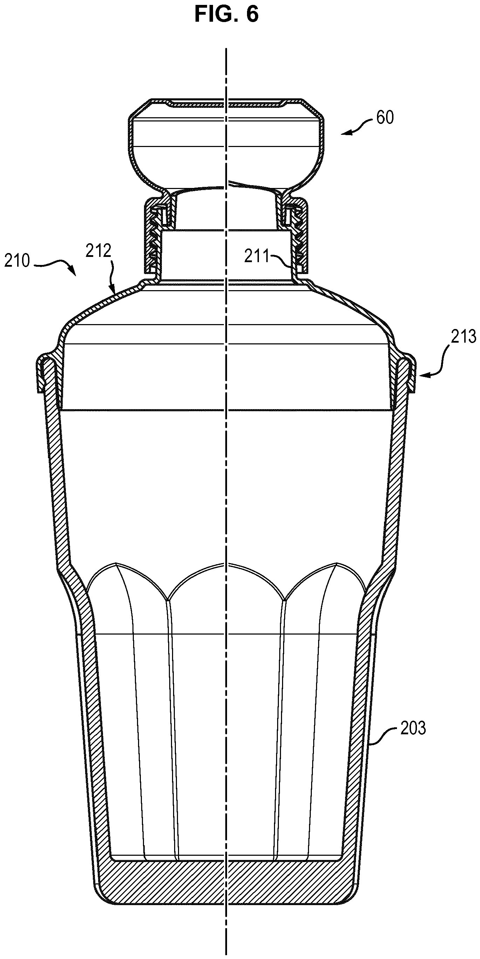

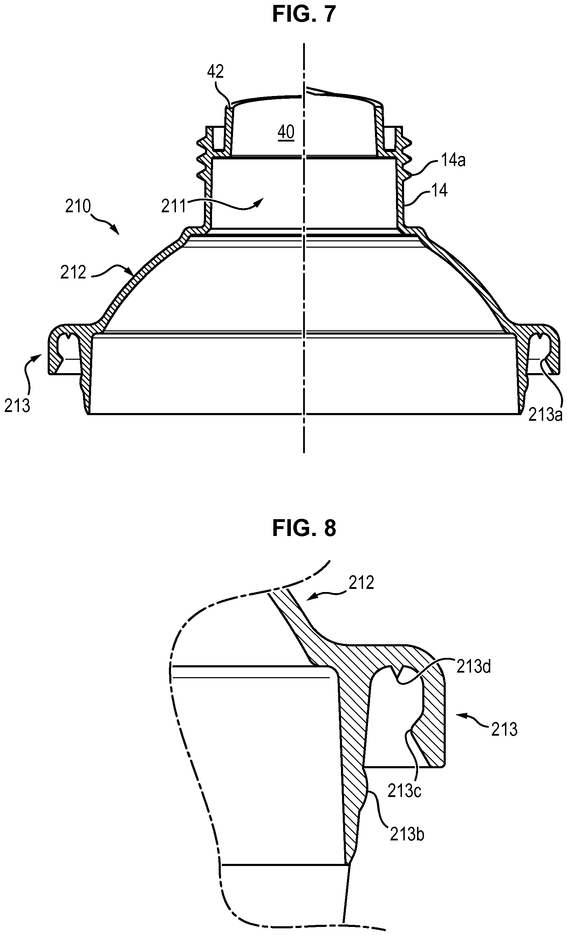

En référence maintenant aux Figures 6 et 7, on a représenté un dispositif distributeur mélangeur destiné à délivrer une dose d'un produit pour boisson dans un récipient récepteur 203 ici sous forme d'un verre ou gobelet en verre, en matière plastique, en carton, en biomatériau, etc. Le dispositif comprend un élément d'assemblage 210 comportant un bague centrale 211 agencée d'une façon générale de la même manière que celle illustrée sur la Figure 1 et que dans WO 2013/124553A2. Autour de cette bague s'évase vers l'extérieur une partie 212 en forme générale de dôme. Au niveau du bord extérieur généralement circulaire de cette partie 212, l'élément 210 forme un gouttière 213 généralement continue tournée vers le bas et destinée à emprisonner le bord supérieur du verre ou du gobelet 203, de préférence de façon étanche. A cet effet, la gouttière comporte deux jupes dont au moins l'une peut être constituée par, ou comporter sur sa surface en contact avec le verre ou gobelet, un matériau souple tel que silicone ou élastomère.

Comme le montre bien la Figure 7, la lèvre extérieure possède un bourrelet périphérique de préférence continu 213a destiné, en étant pressée fermement contre le bord extérieur du verre 203 en partie supérieure, à assurer l'étanchéité.

En variante et de façon non illustrée, cette partie d'assemblage peut recevoir un joint d'étanchéité séparé, par exemple torique en silicone ou élastomère, au fond de la gouttière 213.

Pour le reste, l'élément d'assemblage peut recevoir un récipient autonome soit directement, soit par l'intermédiaire d'un élément d'accueil, comme décrit ici ainsi que dans WO 2013/124553A2. Dans le cas d'espèce de la Figure 6, il est pourvu d'un filetage externe sur la bague 211 et reçoit directement un récipient autonome tel que représenté sur la Figure 5.

L'élément d'assemblage 210 permet ainsi la réalisation de boissons dosées telles que des cocktails, consommées soit directement dans le récipient 203, soit dans un autre récipient, en utilisant alors la fonction bec verseur de la partie formant passage 40 de l'élément d'assemblage. L'étanchéité assurée entre le verre 203 et l'élément d'assemblage 210 permet, après avoir vissé le récipient autonome pour déchirer et effacer l'opercule comme déjà décrit, d'utiliser l'ensemble comme shaker.

La Figure 8 illustre en coupe une variante de réalisation où la gouttière 213 est configurée avec des aménagements (bourrelet intérieur 213b, bourrelet extérieur 213c et jupe supérieure 213d de section généralement triangulaire) de manière à permettre d'assurer une étanchéité avec le bord supérieur retourné d'un gobelet en carton du commerce.

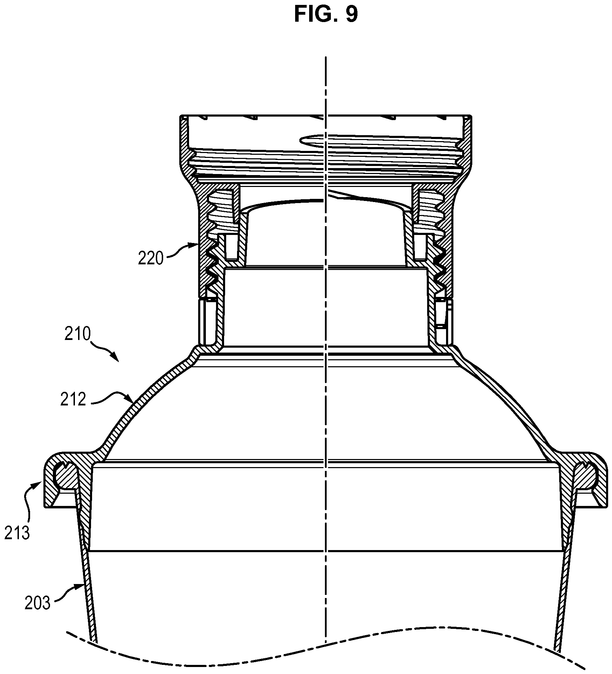

La Figure 9 illustre quant à elle une variante de réalisation où l'élément d'assemblage 210 coopère avec un élément d'accueil 220 possédant en partie supérieure un filetage interne surmontant une collerette sortante et destiné à recevoir par vissage un récipient autonome 60 doté d'un filetage externe, par exemple comme représenté sur la Figure 4.

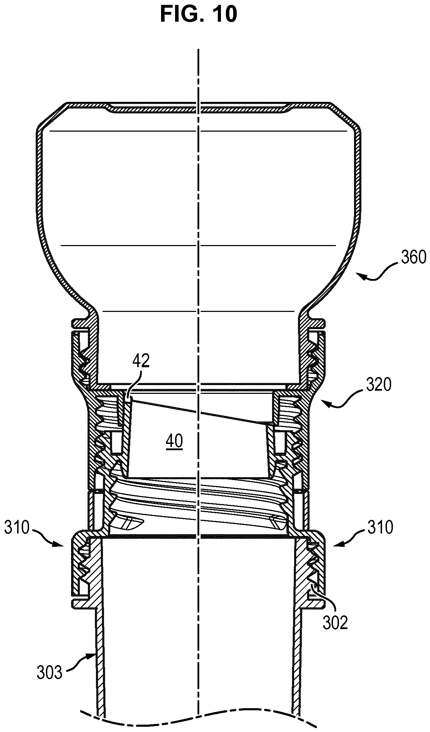

La Figure 10 illustre, par exemple pour usage de diagnostic, un ensemble particulier selon l'invention qui reprend le même élément d'accueil et le même type de capsule que sur la Figure 9 et les montre plus en détail. Il comprend un récipient récepteur 303 de forme généralement tubulaire doté en partie supérieure d'un filetage externe 302.

L'élément d'assemblage 310 est du type de celui illustré sur les Figures 3A et 3B, le filetage interne de plus grand diamètre de cet élément étant utilisé pour le vissage sur le filetage 302 du récipient récepteur 303, et l'autre filetage pouvant être utilisé pour le vissage sur un autre type de récipient.

L'élément d'accueil 320 est du type général illustré sur les Figures 1A et 1B du document WO 2013/124553A2 et ne sera pas à nouveau décrit. Le récipient autonome 360 est conforme à celui de la Figure 4 de la présente demande.

Cet ensemble s'utilise de la même manière que précédemment. Il peut être utilisé par exemple pour diffuser dans une substance (liquide, poudre, etc.) contenue dans le récipient récepteur un produit de diagnostic dosé initialement contenu dans le récipient autonome et étanchéifié par un opercule comme déjà décrit par ailleurs. On visse le récipient autonome 360 sur l'élément d'accueil 320, puis on visse l'ensemble sur l'élément d'assemblage, pour que la dent 42 prévue dans la partie formant passage 40 de l'élément d'assemblage 310 déchire et efface l'opercule du récipient autonome 360 et permette la pleine diffusion du produit de diagnostic dans la substance.

En variante, cet ensemble peut s'utiliser avec un filtre placé dans le récipient autonome avec ou sans opercule.

Dans une autre variante non illustrée, une dose de produit conditionné en sachet sous forme de filtre en papier, matière synthétique ou biomatériau, peut être placé dans un récipient autonome avec ou sans opercule, pour contact et infusion ou macération avec une substance contenue dans le récipient récepteur. Dans ce cas, il n'y a pas dispersion du produit dans le récipient récepteur, mais mise en contact et infusion et macération à travers le filtre retenant le produit placé dans le récipient autonome par circulation du liquide à travers le passage 40 et le sachet filtre à l'intérieur du récipient autonome.

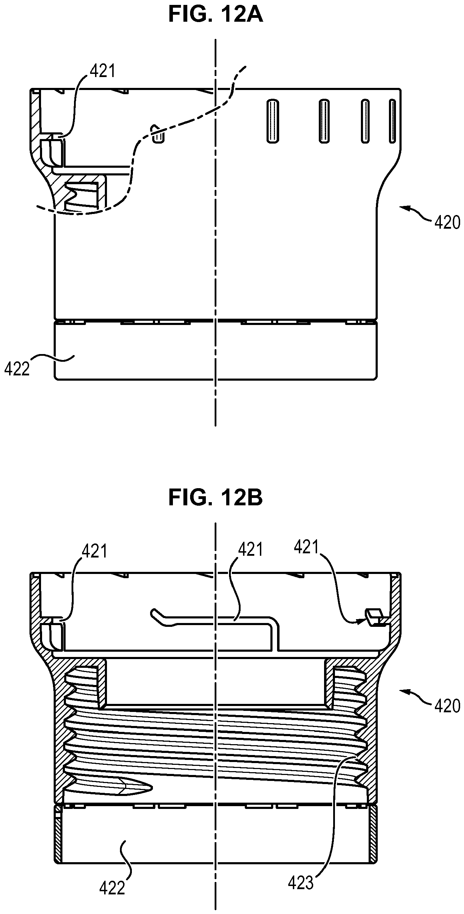

Les Figures 11A, 11B et 12A, 12B illustrent une variante d'un récipient autonome, qui peut être de contenance quelconque, où la retenue du récipient autonome sur un élément d'accueil s'effectue par montage à baïonnette.

A cet effet, le récipient autonome 460 comprend sur sa collerette inférieure 61 un ensemble d'ergots discontinus 61c s'étendant en direction circonférentielle et destinées à coopérer avec des renfoncements complémentaires définis par des nervures en forme générale de « L » 421 formés intérieurement dans la partie supérieure réceptrice de l'élément d'accueil 420.

Toujours en référence aux Figures 12A et 12B, l'élément d'accueil est doté d'une bague de garantie détachable 422 en partie inférieure, bande de garantie qui prolonge vers le bas (en direction de l'élément d'assemblage non représenté) le filetage interne 423 destiné à coopérer avec le filetage externe dudit élément d'assemblage. Cette bande de garantie est reliée au reste de l'élément d'accueil par une ligne de fragilité au niveau de laquelle la séparation est réalisée par exemple par traction sur une languette, non illustrée.

Le vissage de l'élément d'accueil sur l'élément d'assemblage jusqu'à un point tel que le déchirement de l'opercule du récipient autonome monté sur l'élément d'accueil commence, n'est autorisé que si la bande de garantie a préalablement été retirée. En présence de la bande de garantie, seul un vissage partiel de l'élément d'accueil sur l'élément d'assemblage, sans ouverture de l'opercule, est possible.

On garantit ainsi que tant le récipient autonome que l'élément d'accueil n'ont jamais été utilisés, et ce quelle que soit l'application (applicateur de produit, préparation de boissons, diagnostic ou autre).

En référence maintenant à la Figure 13, on a représenté un dispositif destiné particulièrement au diagnostic, à l'analyse ou à la caractérisation de substances (liquides corporels, minerais, substrats divers, etc.).

Le dispositif comprend un élément d'assemblage 510 caractérisé par un partie formant passage 540 dotée à ses deux extrémités de terminaisons biseautées pourvues chacune d'un organe d'ouverture, respectivement 542a, 542b et pouvant former l'une et/ou l'autre un bec verseur. Le dispositif comprend en outre deux filetages externes, respectivement 514a et 514b, aptes à recevoir deux éléments d'accueil respectivement 520a et 520b, eux-mêmes recevant deux récipients respectivement 560a, 560b.

Dans le cas d'espèce, l'un de ces récipients 560a est cylindrique allongé, du type éprouvette, pour recevoir par exemple une poudre, une boue, un liquide, un substrat, etc.

L'autre récipient 560b, plus petit, contient une dose de réactif liquide ou en poudre.

Au moins l'un des récipients, et plus préférentiellement le récipient 560b, est operculé. Dans le cas où l'on souhaite garantir la fraicheur ou l'origine de la substance contenue dans le récipient 560a, ce dernier peut également être operculé.

L'élément d'assemblage 510 comprend en outre deux collerettes externes 512a, 512b situées sensiblement à mi-chemin de la partie de passage 540 et destinées à l'appui des bords libres des éléments d'accueil respectifs 520a, 520b (ou de leurs bagues de garanties lorsqu'elles sont prévues) et à la préhension du dispositif lors de l'assemblage des récipients.

La mise en contact de la substance contenue dans le récipient 560a et du réactif contenu dans le récipient 560b s'effectue en vissant les éléments d'accueil 520a, 520b sur l'élément d'assemblage 510 de manière d'une part à définir une cavité de réaction étanche formée par les deux récipients 560a et 560b et par la partie formant passage 540, et d'autre part à déchirer périphériquement le ou les opercules pour établir la communication entre les différentes régions de la cavité et réaliser le mélange des produits par dispersion et circulation dans ladite cavité.

Avantageusement, notamment dans le cas où la substance contenue dans le récipient 560a est un liquide, un substrat liquide ou une boue et que l'on ne souhaite pas disperser le réactif dans celui-ci, le récipient 560b est doté d'un filtre 569 de nature adaptée. Ce filtre est soit autoporteur, comme illustré sur les figures 13A et 13B, soit monté sur une armature comme on va le décrire dans la suite, soit encore sous forme de sachet-filtre contenant une dose de produit et réalisé en papier, en matière synthétique, en biomatériau, etc. et placé dans le récipient 560b.

Le réactif est libéré par le contact et la circulation du liquide ou du substrat au travers du filtre 569 et mélangé par infusion ou macération pendant une certaine durée.

Par ailleurs, lorsque la réaction réalisée dans la cavité est susceptible de donner lieu à un changement de couleur de la substance ou du réactif, le récipient 560a est avantageusement transparent ou doté d'une fenêtre (non représentée) permettant d'observer le changement de couleur. Des couleurs calibrées servant de référence sont éventuellement imprimées sur le récipient au voisinage de la fenêtre. En variante, le passage 540 est apte, après ouverture du dispositif, à recevoir une bandelette imprégnée d'un réactif pour un autre diagnostic rapide par colorimétrie.

La Figure 14 illustre une variante du dispositif de la Figure 13, avec un récipient 560a plus petit (plus court en direction axiale) et un filtre 569occupant un espace plus petit dans la cavité du récipient 560b.

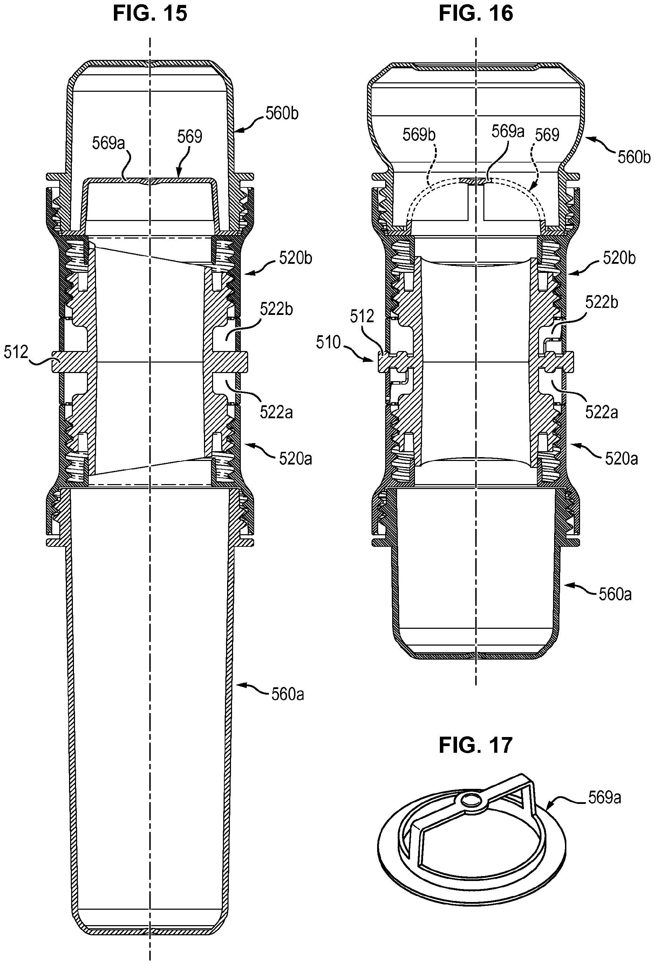

La Figure 15 illustre une autre variante de réalisation, où les éléments d'accueil 520a, 520b sont pourvus chacun d'une bande de garantie, respectivement 522a et 522b, comme décrit en référence aux Figures 12A et 12B. Par ailleurs, dans cette variante, le filtre n'est pas autoporteur mais est constitué d'une membrane filtrante (non visible) portée par une armature 569a. La Figure 17 illustre plus en détail un exemple d'une telle armature, avec une bague surmontée d'un élément d'appui pour la membrane filtrante, celle-ci étant réalisée par exemple en tissu naturel, en matière synthétique (plastique), en papier ou en biomatériau.

Sur la Figure 16, qui est une vue en coupe axiale à 90° par rapport à celle de la Figure 15, on observe mieux la configuration du filtre. La variante de la Figure 16 se distingue par ailleurs de celle de la Figure 15 par un récipient 560a plus court axialement, et par un récipient 560b plus large radialement.

En outre, sur les figures 15 et 16, les collerettes 512a, 512b sont fusionnées en une seule collerette 512.

Ce dispositif comprend ainsi l'équivalent de deux éléments d'assemblage du type décrit dans le document WO 2013/124553A2, mis en opposition et réunis en un élément d'un seul tenant avec un passage unique commun permettant d'assembler deux récipients autonomes directement ou indirectement via des éléments d'accueil respectifs, et de réaliser une double ouverture d'opercule, les cavités des récipients autonomes étant alors réunies par le passage commun.

Ces dispositifs à double organe d'ouverture peuvent s'utiliser avantageusement pour réaliser des diagnostics et analyses rapides de divers produits, mais ils peuvent aussi s'utiliser pour réaliser des mélanges de produits alimentaires ou non par dispersion, infusion ou macération (dans ces deux derniers cas avec un filtre). Une application peut être celle des biberons avec dose de poudre de lait maternisé d'une part et dose d'eau minérale d'autre part.

Cet aspect de l'invention présente de nombreuses applications :
- pour réaliser des boissons (cocktails, mix-produits, infusions et macérations de plantes, etc.) ou des préparations alimentaires comme on l'a indiqué ci-dessus ;
- pour la reconstitution et la préparation de médicaments et de produits pharmaceutiques et biotechnologiques ;
- pour la préparation de produits chimiques et phytosanitaires.

Bien entendu, de nombreuses variantes et modifications peuvent être apportées à l'invention.

Enfin la présente invention doit être considérée comme couvrant toute combinaison de caractéristiques non explicitement décrite mais que l'homme du métier, avec ses connaissances générales, considérera comme réalisable pour aboutir à tel ou tel résultat particulier.

## Revendications

1. Elément d'assemblage, du type comprenant un filetage pour la réception d'un récipient autonome doté d'un film de fermeture (58 ; 68), soit directement, soit par l'intermédiaire d'un élément d'accueil pour un tel récipient autonome, ainsi qu'une partie de passage généralement cylindrique, lisse et dégagée et intégrant un organe d'ouverture du film de fermeture du récipient autonome par déchirement périphérique, **caractérisé en ce qu'**il comprend en outre un évasement dans lequel débouche directement la partie de passage et doté de moyens pour la fixation non vissée d'un élément plus large apte à recevoir la dose de produit contenue dans le récipient autonome après ouverture du film de fermeture.

2. Elément d'assemblage selon la revendication 1, intégrant au moins deux moyens de fixation de types différents.

3. Elément d'assemblage selon la revendication 2, dans lequel les moyens de fixation sont choisis dans un groupe comprenant les filetages internes, les filetages externes, les charnières, les dispositifs d'emmanchement étanche, les dispositifs à baïonnette, les dispositifs de clippage.

4. Elément d'assemblage selon l'une des revendications 1 à 3, dans lequel ledit évasement présente une forme généralement plane et est apte à recevoir un élément d'application de produit.

5. Elément selon la revendication 4, dans lequel l'élément d'application de produit est choisi dans un groupe comprenant les tissus, les mousses, les éponges, les brosses et les pinceaux.

6. Elément selon l'une des revendications 1 à 3, dans lequel ledit évasement présente à sa périphérie un partie d'assemblage pour sa fixation étanche au bord d'un réceptacle de type verre ou gobelet.

7. Combinaison d'un élément d'assemblage selon l'une des revendications 1 à 5 et d'un récipient autonome présentant un corps creux principal et une base cylindrique possédant un filetage.

8. Combinaison selon la revendication 7, dans lequel le filetage du récipient autonome est externe.

9. Combinaison selon la revendication 7, dans lequel le filetage du récipient autonome est interne et le film de fermeture s'étend sur une collerette en renfoncement à l'intérieur du filetage interne.

10. Combinaison d'un élément d'assemblage selon l'une des revendications 1 à 6, d'un élément d'accueil intermédiaire doté d'un filetage interne pour son vissage sur l'élément d'assemblage, et d'un récipient autonome, avec des moyens de montage à baïonnette du récipient autonome sur l'élément d'accueil.

11. Combinaison d'un élément d'assemblage selon l'une des revendications 1 à 6, d'un élément d'accueil intermédiaire doté d'un filetage interne pour son vissage sur l'élément d'assemblage, et d'un récipient autonome, dans lequel l'élément d'accueil intermédiaire comprend une bande de garantie détachable prolongeant le filetage interne en direction de l'élément d'assemblage et apte à sélectivement autoriser, après retrait, un vissage permettant le déchirement périphérique du film de fermeture du récipient autonome.

12. Dispositif applicateur d'un produit dosé, **caractérisé en ce qu'**il comprend un élément d'assemblage selon l'une des revendications 1 à 5 et un élément d'application de produit fixé sur l'évasement de l'élément d'assemblage.

13. Dispositif selon la revendication 12, dans lequel l'élément d'assemblage est réalisé d'un seul tenant ou par solidarisation de deux parties dont l'une porte l'évasement et l'élément d'application de produit.

14. Dispositif selon la revendication 12 ou 13, dans lequel l'élément d'application de produit possède une armature et est fixé par clippage de l'armature sur l'évasement.

15. Shaker pour la préparation de boissons ou de mélanges de produits, **caractérisé en ce qu'**il comprend en combinaison un réceptacle de type verre ou gobelet et un élément d'assemblage selon la revendication 6.
